# EUROPEAN PATENT SPECIFICATION

(11) **EP 1 243 430 B1**
(45) Date of publication and mention of the grant of the patent: **30.06.2004**
(21) Application number: 02075921.3
(22) Date of filing: 07.03.2002
(51) Int. Cl.: B41J 11/04, B41J 15/04, B41J 13/22, H04N 1/08

(54) **Inkjet printing system with internal drum paper feed**
Tintenstrahldrucksystem mit Innentrommelpapierzuführ
Système d'impression à jet d'encre avec alimentation de papier par tambour intérieur

(30) Priority: 19.03.2001 US 811703
(43) Date of publication of application: 25.09.2002
(73) Proprietor: EASTMAN KODAK COMPANY, Rochester, New York 14650 (US)
(72) Inventor: Wojcik, Timothy J., Rochester, New York 14650-2201 (US); Pickering, James E., Rochester, New York 14650-2201 (US)
(74) Representative: Haile, Helen Cynthia

(56) References cited:
- EP-A- 1 009 158
- US-A- 3 750 573
- US-A- 3 995 951

## Description

This invention relates in general to printing systems and, more particularly the invention relates to drum-based printing systems which accommodate flexible media format needs.

Without limiting the scope of the invention, its background is described in connection with inkjet printing systems, as a preferred example.

Inkjet printing systems are commonly used for the production of text and graphic images for home, office and commercial applications. A number of system architectures have been developed in which the inkjet printhead is translated across the receiver media as it is held on a flat platen or drum. The receiver can be supplied either from a stack or several stacks of pre-cut receiver media, or can be cut from a receiver media supply roll and transported to the imaging platen or drum surface.

Drum-based printing systems and the associated receiver transport mechanisms for positioning and holding the cut receiver media onto the drum are described in U.S. Patent No. 5,771,054; U.S. Patent No. 5,445,604; U.S. Patent No. 6,048,060 and EP 0 894 638 A1. Described therein, for example, are combinations of vacuum, electrostatics and mechanical clamping means for holding the cut receiver media onto the drum. Similarly, U.S. Patent No. 4,703,329 describes receiver media which is supplied on a roll from the inside of the drum and held in contact with the drum surface by tensioning the web over the drum surface through drive rollers which are attached to the drum assembly. After printing, the desired length of receiver media is then fed off the drum to an external cutter.

There are, however, two main disadvantages associated with the internal drum paper feed concept described in U.S. Patent No. 4,703,329. First, the ink on the printed media is typically wet after application, thus causing image quality artifacts due to ink transfer to the exit drive rollers. Second, a significant amount of receiver media is wasted on each printed segment due to the amount of media which is threaded in the exit drive system path and thus not accessible for printing.

Accordingly, a need existed for a system which does not require vacuum means to hold the receiver media onto the drum. A means of enabling cutting of receiver media with minimal waste, particularly at the trailing edge of the printed segment, would provide numerous advantages. EP 1009158A shows such a system. Furthermore, a need exists for a system which would deliver printed receiver media segments to a post-print treatment station for drying without touching the image surface so as to not create image quality artifacts.

The present invention provides a system and method of accommodating flexible media in accordance with independent claims 1 and 6.

Accordingly, disclosed in one embodiment is a receiver media handling system for producing variable sized printed receiver media for an inkjet printer having an internal receiver media supply roll and a printhead for printing images on the receiver media from the supply roll. The receiver media handling system comprises a drum having a tube-shaped outer surface with a plurality of cutter notches predisposed at predetermined locations. In one embodiment, the drum is a rotary drum configured to rotate counter-clockwise in order to position cut receiver media to exit along a receiver media exit path. Once the cut receiver media is unloaded, the rotary drum is configured to return to a receiver media feed position by way of rotation.

The receiver media handling system also comprises a receiver media feeder for drawing receiver media from the internal supply roll and along the outer surface of the drum. The receiver media handling system further comprises at least one in-feed drive roller and an outer guide shoe. The in-feed drive roller is configured to engage onto the tube-shaped outer surface of the drum, push the receiver media from the receiver media supply roll to a clamp, or lead edge clamp, and retract from the outer surface to allow for printing. The outer guide shoe is adapted to guide the receiver media from the supply roll to the lead edge clamp, which is incorporated onto the rotary drum for retaining an edge of the receiver media from the supply roll at a location about the drum.

The receiver media handling system further comprises means for retaining the receiver media from the internal receiver media supply roll in a printing position. In one embodiment, the receiver media from the internal supply roll is tensioned between the lead edge clamp and the receiver media supply roll. Tensioning is performed by motorized means which causes the drum to first rotate from the receiver media supply roll to a printing position, and then causes the drum to retract the receiver media to a cutting position following printing.

The receiver media handling system further comprises a stripper/in-feed guide configured to cause the cut receiver media to exit onto a post-print treatment station. The post-print treatment station can include a paper tray, a dryer section, or a laminator, for example.

According to the invention, disclosed is a printer system for producing variable sized printer receiver media. The printer system comprises a receiver media handling system preferably, for an inkjet printer having an internal receiver media supply roll; a printhead carriage for printing images within an image area on the receiver media from the supply roll; and preferably a post-print treatment station adapted to receive the variable sized printed receiver media. The printhead carriage may be page-width and stationary so that printing occurs as the received medium is translated across the printhead surface. Alternatively, the printhead is non-page width requiring axial motion of the printhead about the rotary drum for printing to occur across the entire width of the receiver medium. In all aspects, the printhead and rotary drum are compatible with known writing modes, such as indexing and interleaving, utilized to achieve accurate and precise images on the receiver medium.

In accordance with yet another embodiment, disclosed is a method of accommodating flexible media format needs for an inkjet printer including a rotary drum having a tube-shaped outer surface with a plurality of cutter notches predisposed at predetermined locations, an internal receiver media supply roll, and means for printing images on the receiver media from the supply roll. The method comprises the step of drawing the lead edge of the receiver media from the supply roll and along the outer surface of the rotary drum. In operation, the rotary drum is rotated with at least one in-feed drive roller passively engaged to urge the receiver media onto the drum surface in order to tension the receiver media around the rotary drum through the receiver media supply roll. That is, the receiver media is driven around the rotary drum via an outer guide shoe and out to a lead edge clamp. A stripper/in-feed guide is then engaged to cause the leading edge of the receiver medium to be positioned for clamping by the lead edge clamp.

After clamping, the receiver media is then tensioned around the rotary drum through the receiver media supply roll. Once the receiver media has been tensioned, the receiver media about the outer surface is then positioned for printing. As such, an image area where printing is to be applied on the receiver media is defined, and the in-feed drive roller is retracted from the outer surface of the rotary drum to allow for printing within the defined image area. Concurrently, the rotary drum is activated to speed for printing. In a preferred embodiment, a printhead carriage is then translated across the rotary drum for printing images on the receiver media within the defined image area. That is, one image can be printed onto the receiver media and can be of any of the prescribed lengths where the cutting notches are positioned. Thus, printing can occur from the lead edge of the receiver media up to the six o'clock position; from the lead edge to the three o'clock position; or from the lead edge to the twelve o'clock position, for example.

The method further comprises the step of cutting the receiver media at any one of the cutter notches predisposed at predetermined locations about the outer surface of the rotary drum. Once printing is complete, the rotary drum is deactivated, and thus rotated to a desired cutting position with respect to the predisposed cutting notches. The method also comprises the step of causing a retractable cutting blade, or rotary cutter wheel, to come in contact with the receiver media on the rotary drum by running against the cutter notches on the outer surface. Once the receiver media has been cut at the desired length, the cutting blade is retracted and the rotary drum is rotated in the counter-clockwise direction. As such, the cut receiver media is pushed out of its original path and onto the path of the stripper/in-feed guide.

The method also comprises the step of causing the cut receiver media to exit a receiver media path via the stripper/in-feed guide. That is, the cut receiver media is unloaded to a post-print treatment station, such as a paper tray, a dry section or a laminator. The rotary drum is then rotated and returned to a paper feed position for the next printing cycle.

Technical advantages of the present invention include a smaller-sized printer system since the rotary drum assembly comprises an internal receiver media supply roll.

Other technical advantages include delivery of wet, printed receiver media to a post-print treatment station for drying without touching the image surface. In addition, the position of the image on the receiver media is precisely known while it is being held on the rotary drum, thus enabling cutting with minimal waste, particularly at the trailing edge of the printed segment. Furthermore, the present invention includes a system which does not require vacuum means to hold the receiver media onto the drum.

For a more complete understanding of the present invention, including its features and advantages, reference is made to the following detailed description of the invention, taken in conjunction with the accompanying drawings in which:
Figure 1 is a diagram illustrating the drum assembly of a prior art inkjet printer system;
Figure 2 is a perspective view of a rotary drum incorporated in an inkjet printer, according to one embodiment of the present invention;
Figures 3A-3C illustrate the paper feed position along with the method of drawing paper from the paper supply roll and along the outer surface of the rotary drum, in accordance with a preferred embodiment of the present invention; and
Figures 4A-4B illustrate the paper exit position along with the steps of cutting the paper at any one of the cutter notches and causing the cut paper to exit a paper exit path, in accordance with a preferred embodiment of the present invention.

Corresponding numerals and symbols in these figures refer to corresponding parts in the detailed description, unless otherwise indicated.

While the making and using of various embodiments of the present invention are discussed in detail below, it should be appreciated that the present invention provides many applicable, inventive concepts which can be embodied in a wide variety of specific contexts. These specific embodiments discussed herein are merely illustrative of specific ways to make and use the invention, and do not delimit the scope or application of the invention.

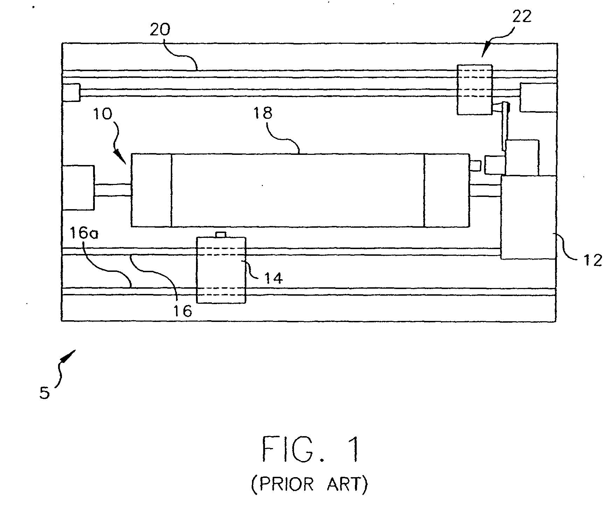

Referring to Figure 1, therein is shown an inkjet printer that includes a rotatable drum 10 driven by a stepping motor 12. An inkjet printhead assembly 14 is mounted for longitudinal movement along tracks 16 and 16a. The imaging paper, or other sheet material 18, envelopes the outer surface of the rotatable drum 10 during the imaging process and, at its conclusion, is ejected across a cutter bar 20 where it is sheered by a cutter mechanism, generally indicated at 22. The term "sheet material" as used in this application includes the various flexible materials on which images can be recorded, such as paper, transparencies and photographic materials, which are supplied in long length. All such flexible material will be referred to hereinafter as paper 18. While the rotatable drum 10 rotates, the inkjet printhead assembly 14 moves longitudinally along the rotatable drum 10 following a writing path on the paper 18 to produce the desired image through a series of printing of image swaths. As the completed image is ejected, a length of unused paper 18 is simultaneously drawn from the interior of the rotatable drum 10 and positioned around the outside of the rotatable drum 10.

There are two main disadvantages which exist in the prior art printer system, such as those represented by Figure 1. First, excessive waste of the receiver media, or paper 18 results in an efficient printer. Second, ink artifacts tend to appear on the drive rollers due to wet ink. In operation, the prior art printer systems, such as printer system 5, provides for ink to be laid out onto the paper 18, forming an image. The paper 18, which is still wet from the ink application, is then driven through a drive roller set (not shown) in order to meter out the paper 18 or determine where the paper 18 is to be cut. As such, ink is transferred onto the drive rollers, causing ink artifacts.

Furthermore, the prior art printer systems rely on the lead edge of the paper 18 to be fed out through the drive rollers. As a result, the amount of paper 18 that is contained within the rollers is wasted when the image paper segment is "topped off" or cut, thus causing excessive waste of the receiver media. If the printer system is utilized for photographic or other high-end applications, the waste of receiver medium (e.g. high quality gloss, matte, or large paper format) can be quite expensive.

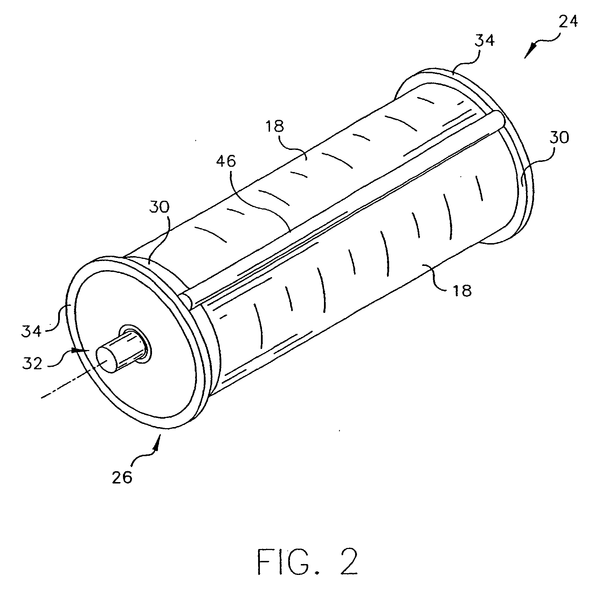

Figure 2 illustrates a paper handling system, denoted generally as 24, in accordance with one embodiment of the present invention. Receiver media, or paper 18, is supplied from a paper supply roll 32 contained within the rotary drum 26. Due to the rotary drum 26 having an internal paper supply roll 32, the paper handling system 24, as well as the printer system embodying paper handling system 24, is smaller in size. The term "receiver media" as used herein includes the various flexible media on which images can be recorded, such as paper, transparencies and photographic paper, which are supplied as a roll in long length. The term "paper" will be used hereinafter when referring to the various types of flexible media.

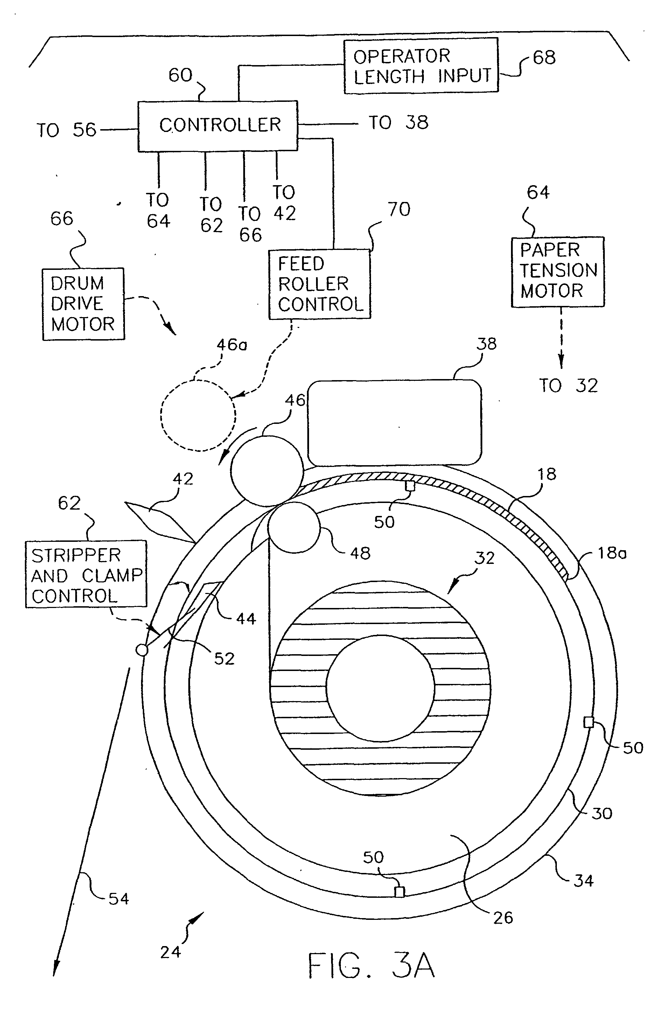

In accordance with this embodiment, paper 18 is fed onto the outer surface 30 of the rotary drum 26 and held in place by tensioning the paper 18 between a lead edge clamp 44 (discussed below in Figures 3A-3C) and the paper supply roll 32. The amount of paper 18 on the outer surface 30 of the rotary drum 26 is constant for all requested print formats, but the image area for the current print job determines the length of the finished segment of paper 18.

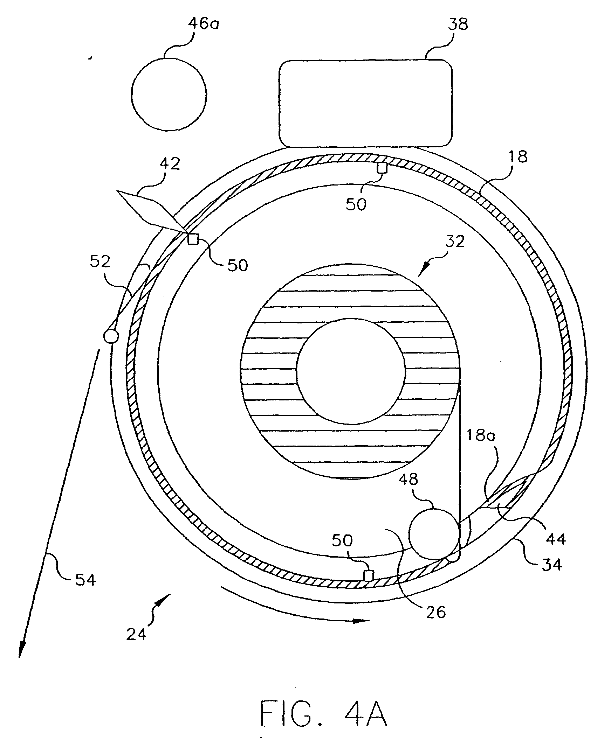

With reference to Figures 3A-3C and 4A-4B, therein is shown a cross-section of the paper handling system 24 of Figure 2 and its operation. Specifically, Figures 3A-3C illustrate the steps associated with the paper feed position, while Figures 4A-4B illustrate the steps associated with the paper exit position. Those skilled in the art will appreciate that the figures referred to herein are not drawn to scale and have been enlarged in order to illustrate the major aspects of the present invention. A scaled drawing would not show the fine detail necessary to portray and understand the present invention.

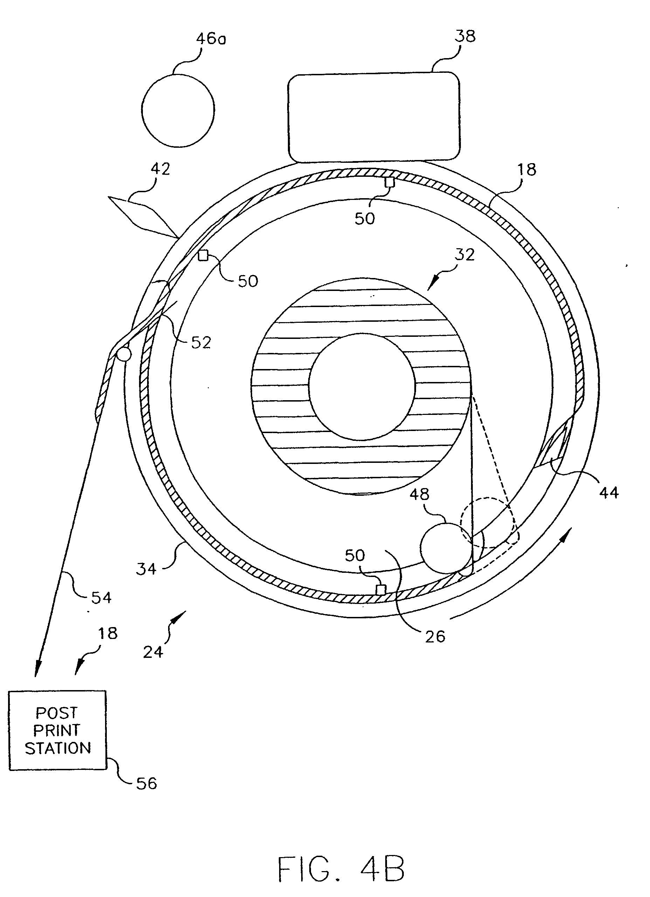

In one embodiment, a printer system for producing variable size printed paper 18 comprises a paper handling system 24 having an internal paper supply roll 32; a printhead carriage 38 for printing images within an image area on the paper 18 of the supply roll 32; and a post-print treatment station 56 (shown in Figure 4B) adapted to receive the variable size printed paper 18 following printing and sizing/cutting.

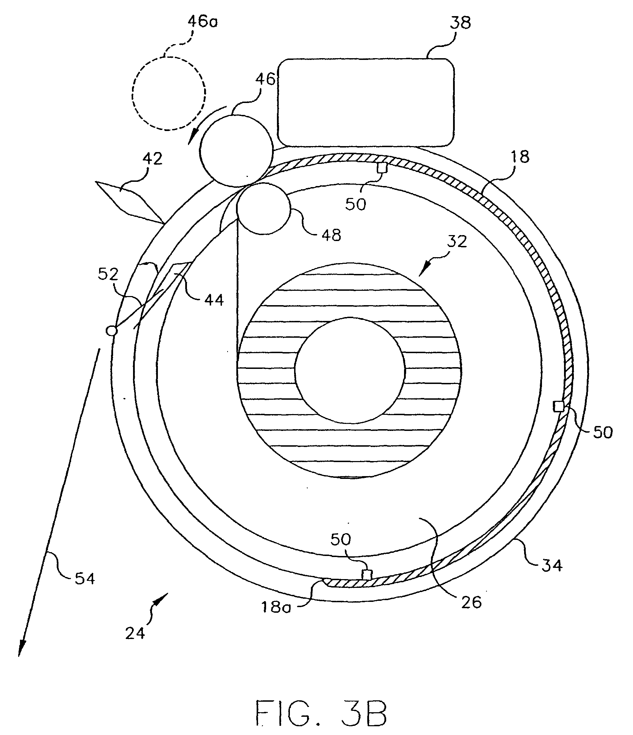

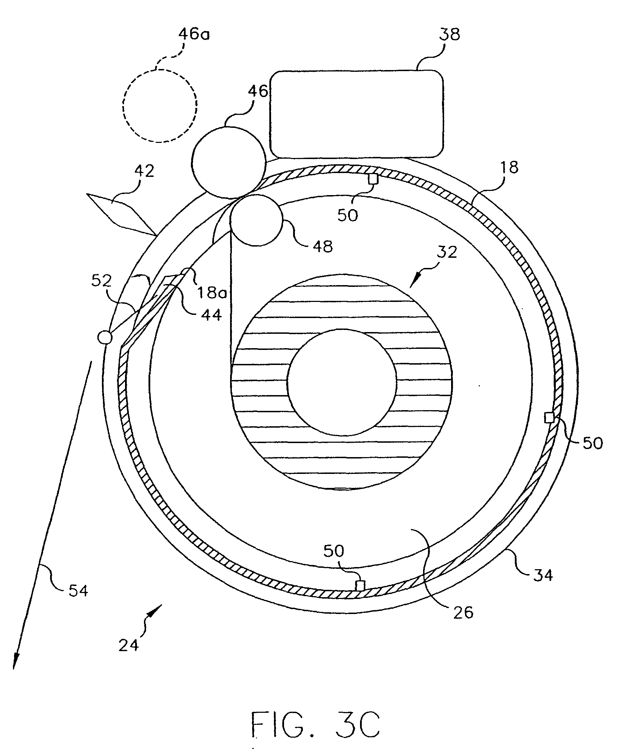

With reference to Figures 3A-3C, therein is shown a cross-section of paper handling system 24 comprising a rotary drum 26 having a tube-shaped outer surface 30 with a plurality of cutter notches 50 predisposed at predetermined locations along surface 30. A paper feeder 48 is configured to draw paper 18 from the paper supply roll 32 and along the outer surface 30, as shown in Figure 3A. A feed roller control mechanism 70 that may include a motor and other electromechanical devices is coupled to the controller 60 and the rollers 46 and 48 for providing rotation and pivoting movement and provides the driver power for the paper feeder as is well known to those of ordinary skill in the art. In one embodiment, the paper handling system 24 comprises at least one in-feed drive roller 46, which initially is in a retracted position 46a. As such, the in-feed drive roller 46, when in a position shown in Figure 3A, is configured to engage onto the outer surface 30 and to push the paper 18 from the paper supply roll 32 to a lead edge clamp 44, as illustrated in Figures 3B and 3C. That is, the paper 18 is driven around the rotary drum 26 and out to the lead edge clamp 44. The paper handling system 24 can comprise additional in-feed drive rollers predisposed around the rotary drum 26, if necessary.

In operation, the outer guide shoe 34 is adapted to guide the paper 18 from the paper supply roll 32 toward the lead edge clamp 44, which is incorporated onto the rotary drum 26. Upon reaching its desired location, the lead edge 18a of the paper 18 from the supply roll 32 is retained by the lead edge clamp 44 at that particular location about the rotary drum 26. That is, the stripper/in-feed guide 52 is configured to urge the lead edge clamp 44 to engage in a clamped position, as shown in Figure 3C. A microcomputer controlled controller 60 may be provided to actuate the various mechanical components of the system. The controller 60 may be suitably programmed to provide a control signal to a stripper and clamp control 62 which may be one or more motors, cams or gears, belts or solenoids which drive the stripper/in-feed guide 52.

Once the lead edge 18a of the paper 18 has been securely retained in place via the lead edge clamp 44, the paper 18 is tensioned around the rotary drum 26 through the paper supply roll 32, such as by drive provided by a paper tension motor 64 or springs. As such, the only wasted paper is the lead edge 18a of the paper 18 under the lead edge clamp 44, unlike the prior art printer systems, such as those represented by Figure 1. Thus, paper waste is minimized.

The rotary drum 26 is then activated and positioned for printing such as through step-wise rotation of the drum about its axis by drive imparted by a drum drive motor 66. As is well known, the various motors may be reduced in number by providing clutches to control various mechanical members. In one embodiment, the printhead carriage 38 is translated across the rotary drum 26 while printing images on the paper 18 within a defined image area. That is, printing can occur anywhere within the area of paper 18 positioned around the outer surface 30 of the rotary drum 26 between the paper supply roll 32 and the lead edge clamp 44. For example, one image can be printed on the paper 18 and can be any of the prescribed lengths where the cutter notches 50 are positioned. The cutter notches (50) each extend parallel to the rotational axis of the drum. That is, in one embodiment, printing can occur from the lead edge clamp 44 to the three o'clock position; from the lead edge clamp 44 to the six o'clock position; or from the lead edge clamp 44 to the twelve o'clock position. Thus, in this particular embodiment, images can be printed at three different lengths. One skilled in the art can appreciate that any number of cutter notches 50 can be disposed about the outer surface 30 of the rotary drum 26. Furthermore, the locations of the cutter notches 50 are then used to determine the desired area and length in which the image is to be printed, as well as the length of the paper 18 to be cut.

In yet another embodiment, the printhead carriage 38 is stationary and the printhead spans the entire width of the receiver medium (e.g. page-width). As such, printing of the desired image is accomplished by rotation of the rotary drum 26 with respect to the position of the printhead carriage 38. Once printing is complete, the rotary drum 26 is deactivated or brought to a stop. Alternatively, the printhead carriage may be less than page-width requiring axial translation of the printhead carriage 38 about the rotary drum 26 to accomplish full width printing on the receiver medium. In either case, the motion of the printhead carriage 38 may also involve a writing mode, such as indexing or interleaving, to correct for printing artifacts on the receiver medium. Such printing processes are well known in the art.

Utilizing the printed image area for the current print job, the location as to where to cut the paper 18 with respect to length is determined. The rotary drum 26 is then rotated in the counter-clockwise direction, as shown in Figure 4A, to the desired cutting position where a cutting blade 42, or rotary cutting wheel, is located and configured to cut the paper 18 at any one of the cutter notches 50 in accordance with an operator length input via a keyboard or control panel input device 68. The cutting blade 42 is initially in a retracted position during the paper feed process and printing, as shown in Figures 3A-3C. However, once the rotary drum 26 is in the cutting position, the cutting blade 42, or rotary cutting wheel, is then configured to come in contact with the paper 18 on the rotary drum 26 and cut the paper 18 to length by running parallel to the rotational axis of drum 26 and against the cutter notches 50 on the outer surface 30.

The cutter blade 42 is then adapted to return to its retracted position in order to allow the rotary drum 26 to rotate counter-clockwise. In doing so, the cut paper 18 due to its flexibility is pushed out of its original path and onto the path of the stripper/in-feed guide 52 as shown in Figure 4B. As such, the stripper/in-feed guide 52 is configured to cause the cut paper 18 to exit onto a post-print treatment station 56 (shown in Figure 4B) such as a paper tray, a dryer section or a laminator, for example. The former lead edge 18a of the receiver sheet is unclamped from the clamp 44 and the portion of the receiver sheet having the printed image is removed from the drum by feeding devices not shown in the post-print treatment station 56. The rotary drum 26 is then returned to the paper feed position via rotation in order to proceed with the next cycle of image printing.

It will be noted that in the printing of each of plural images the images may be cut to different sizes. However, the amount of receiver media that is supported on the outer surface of the rotary drum prior to printing of each of the plural images is the same.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is, therefore, intended that the impended claims encompass any such modifications or embodiments.

## Claims

1. A printer system comprising:
a receiver media handling system including a drum (10) having an internal receiver media supply roll (32) including means (46, 48) for feeding receiver media from said roll onto said drum so as to position a portion of the receiver media upon the drum;
a printhead (14) positioned for printing an image on said portion of the receiver media supported on the drum (10);
cutting means (42, 50) for cutting the receiver media to separate the portion of the receiver media that has received the printed image from a portion connected to the internal receiver media supply roll, the cutting means being actuatable to cut the receiver media at a location of the receiver media where the receiver media is supported on the drum, the drum having a plurality of cutter notches (50) disposed at predetermined locations on the drum for providing respective plural predetermined locations where the receiver media may be cut so as to allow the receiver media to be cut to one of plural predetermined different lengths; and
means for stripping (52) the portion of the receiver media that has received the printed image from the drum.

2. The printer system according to claim 1 wherein the receiver media handling system includes a receiver media feeder (46, 48) for drawing receiver media from the supply roll and along an outer surface of the drum.

3. The printer system according to claim 1 or claim 2 and including a cutting blade that is movable in a direction parallel to the central axis of the drum and cooperates with one of cutter notches that are also each directed in a direction parallel to the central axis of the drum to cut an end of the portion of the receiver media that has received the printed image from the portion connected to the internal receiver media supply.

4. The printer system according to any one of claims 1 through 3 wherein a lead edge clamp (44) is connected to the drum for retaining a leading edge (18a) of the receiver media at a location on the drum.

5. The printer system according to any one of claims 1 through 4 wherein the printhead is an inkjet printhead and is adapted to deposit ink as an image on the receiver media.

6. A printing method comprising:
feeding receiver media from a media supply roll located with the interior of a drum onto an outer surface of the drum;
securing a portion of the receiver media on the surface of the drum;
printing an image on the portion of the receiver media supported on the drum;
cutting the receiver media to separate the portion of the receiver media that has received the printed image from a portion connected to the internal receiver media supply roll, the cutting being made at a location of the receiver media where the receiver media is supported on the drum, the location being one of plural predetermined locations on the drum and the drum including plural cutting members disposed at predetermined spaced locations on the drum for providing the plural predetermined locations where the receiver media may be cut to one of plural different selected lengths; and
stripping the portion of the receiver media that has received the printed image from the drum.

7. The printing method according to claim 6 and wherein the cutting members are notches which are each directed in a direction parallel to the central axis of the drum and in accordance with a predetermined selected length a respective notch cooperates with a cutting blade external to the drum to cut the receiver media to the selected length.

8. The printing method according to claim 6 or 7 and wherein stripping of the receiver media that has received the printed image is made by removing first from the drum an end of the receiver media that is last cut.

9. The printing method according to any of claims 6 through 8 and wherein in the printing of each of plural images that are cut to different sizes, the amount of receiver media that is supported on the outer surface of the rotary drum prior to printing of each of the plural images is the same.

10. The printing method according to any of claims 6 through 9 and wherein an image is printed on the portion of the receiver media supported on the drum using an inkjet printer that deposits ink upon the portion.

## Patentansprüche

1. Druckersystem mit
- einem Empfangsmedium-Handhabungssystem einschließlich einer Trommel (10) mit einer in deren Innern befindlichen Vorratsrolle (32) für das Empfangsmedium und einer Vorrichtung (46, 48), welche das Empfangsmedium von der Rolle auf die Trommel fördert, um so einen Teil des Empfangsmediums auf der Trommel zu positionieren;
- einem Druckkopf (14), der auf dem auf der Trommel (10) aufliegenden Teil des Empfangsmediums ein Bild druckt;
- einer Vorrichtung (42, 50) zum Abschneiden des Empfangsmediums, um den Teil des Mediums, welcher das gedruckte Bild erhalten hat, von einem mit der internen Vorratsrolle für das Empfangsmedium verbundenen Teil zu trennen, wobei die Schneidevorrichtung zum Abschneiden des Empfangsmediums an einer Stelle des Mediums betätigbar ist, an der das Empfangsmedium auf der Trommel aufliegt, und wobei die Trommel mehrere Einkerbungen (50) aufweist, die an vorbestimmten Stellen auf der Trommel angeordnet sind, um eine Vielzahl entsprechender, vorbestimmter Stellen bereitzustellen, an denen das Empfangsmedium auf eine von mehreren vorbestimmten, unterschiedlichen Längen geschnitten werden kann; und
- einer Vorrichtung (52) zum Abziehen des das gedruckte Bild erhaltenen Teils des Empfangsmediums von der Trommel.

2. Druckersystem nach Anspruch 1, **dadurch gekennzeichnet, dass** das Empfangsmedium-Handhabungssystem eine Zuführvorrichtung (46, 48) aufweist, welche das Medium von der Vorratsrolle und über eine Außenfläche der Trommel zieht.

3. Druckersystem nach Anspruch 1 oder 2, **gekennzeichnet durch** eine Schneideklinge, welche in einer Richtung parallel zur Mittelachse der Trommel bewegbar ist und mit einer der Schneidekerben zusammenwirkt, die jeweils auch in einer zur Mittelachse der Trommel parallelen Richtung ausgerichtet ist, um einen Endabschnitt des Teils des Empfangsmediums, welcher das gedruckte Bild erhalten hat, von dem mit dem internen Mediumvorrat verbundenen Teil abzuschneiden.

4. Druckersystem nach einem der Ansprüche 1 - 3, **dadurch gekennzeichnet, dass** eine Klammer (44) mit der Trommel verbunden ist, um eine Vorderkante (18a) des Empfangsmediums an einer Stelle auf der Tommel festzuhalten.

5. Druckersystem nach einem der Ansprüche 1 - 4, **dadurch gekennzeichnet, dass** der Druckkopf ein Tintenstrahldruckkopf ist, der Tinte als Bild auf dem Empfangsmedium absetzt.

6. Druckverfahren mit folgenden Schritten:
- Fördern des Empfangsmediums von einer im Innern der Trommel angeordneten Medium-Vorratsrolle auf eine Außenfläche der Trommel;
- Arretieren eines Teils des Empfangsmediums auf der Oberfläche der Trommel;
- Drucken eines Bildes auf den auf der Trommel aufliegenden Teil des Empfangsmediums;
- Abschneiden des Empfangsmediums, um den Teil des Mediums, welcher das gedruckte Bild erhalten hat, von einem mit der internen Vorratsrolle für das Empfangsmedium verbundenen Teil zu trennen, wobei der Abschneidevorgang an einer Stelle des Mediums durchgeführt wird, an der das Empfangsmedium auf der Trommel aufliegt, wobei die Stelle eine von mehreren vorbestimmten Stellen auf der Trommel ist und die Trommel mehrere Schneidelemente aufweist, die an vorbestimmten, voneinander beabstandeten Stellen auf der Trommel angeordnet sind, um die Vielzahl der vorbestimmten Stellen, an denen das Empfangsmedium auf eine von mehreren verschiedenen, ausgewählten Längen geschnitten werden kann, bereitzustellen; und
- Abziehen des Teils des Empfangsmediums von der Trommel, welches das gedruckte Bild erhalten hat.

7. Druckverfahren nach Anspruch 6, **dadurch gekennzeichnet, dass** die Schneideelemente Einkerbungen sind, die jeweils in einer zur Mittelachse der Trommel parallelen Richtung ausgerichtet sind, und dass in Übereinstimmung mit einer vorbestimmten, ausgewählten Länge eine entsprechende Einkerbung mit einer außerhalb der Trommel angeordneten Schneideklinge zusammenwirkt, um das Empfangsmedium auf die ausgewählte Länge zu schneiden.

8. Druckverfahren nach Anspruch 6 oder 7, **dadurch gekennzeichnet, dass** das Abziehen des Empfangsmediums, welches das gedruckte Bild erhalten hat, dadurch erfolgt, dass man zuerst einen zuletzt geschnittenen Endabschnitt des Mediums von der Trommel entfernt.

9. Druckverfahren nach einem der Ansprüche 6 - 8, **dadurch gekennzeichnet, dass** beim Drucken jedes der Vielzahl von Bildern, die auf unterschiedliche Größen zugeschnitten sind, die Menge an Empfangsmedium, die vor dem Drucken jedes der Vielzahl von Bildern auf der Oberfläche der Drehtrommel aufliegt, die gleiche ist.

10. Druckverfahren nach einem der Ansprüche 6 - 9, **dadurch gekennzeichnet, dass** auf den auf der Trommel aufliegenden Teil des Empfangsmediums unter Verwendung eines Tintenstrahldruckers, der auf dem Teil Tinte absetzt, ein Bild gedruckt wird.

## Revendications

1. Système d'imprimante comprenant :
un système de manipulation de support de réception comprenant un tambour (10) comportant un rouleau d'alimentation en support de réception interne (32) comprenant un moyen (46, 48) destiné à faire avancer le support de réception depuis ledit rouleau sur ledit tambour de façon à positionner une partie de support de réception sur le tambour,
une tête d'impression (14) positionnée pour imprimer une image sur ladite partie du support de réception supportée sur le tambour (10),
un moyen de coupe (42, 50) destiné à couper le support de réception pour séparer la partie du support de réception qui a reçu l'image imprimée d'une partie reliée au rouleau d'alimentation en support de réception interne, le moyen de coupe pouvant être actionné pour couper le support de réception à un emplacement du support de réception où le support de réception est supporté sur le tambour, le tambour comportant une pluralité d'encoches de coupe (50) disposées à des emplacements prédéterminés sur le tambour en vue de fournir plusieurs emplacements prédéterminés respectifs où le support de réception peut être coupé de façon à permettre que le support de réception soit coupé à l'une de plusieurs longueurs différentes prédéterminées, et
un moyen destiné à enlever (52) la partie du support de réception qui a reçu l'image imprimée du tambour.

2. Système d'imprimante selon la revendication 1, dans lequel le système de manipulation du support de réception comprend un dispositif d'avance de support de réception (46, 48) destiné à tirer le support de réception depuis le rouleau d'alimentation et suivant une surface extérieure du tambour.

3. Système d'imprimante selon la revendication 1 ou la revendication 2 et comprenant une lame de coupe qui est mobile dans une direction parallèle à l'axe central du tambour et coopère avec une des encoches de coupe qui sont également chacune dirigées dans une direction parallèle à l'axe central du tambour pour couper une extrémité de la partie du support de réception qui a reçu l'image imprimée par rapport à la partie reliée à l'alimentation en support de réception interne.

4. Système d'imprimante selon l'une quelconque des revendications 1 à 3, dans lequel un élément de retenue de bord avant (44) est relié au tambour en vue de retenir le bord avant (18a) du support de réception à un emplacement sur le tambour.

5. Système d'imprimante selon l'une quelconque des revendications 1 à 4, dans lequel la tête d'impression est une tête d'impression à jet d'encre et est conçue pour déposer de l'encre sous la forme d'une image sur le support de réception.

6. Procédé d'impression comprenant :
le chargement du support de réception depuis un rouleau d'alimentation en support positionné à l'intérieur d'un tambour sur une surface extérieure du tambour,
la fixation d'une partie du support de réception sur la surface du tambour,
l'impression d'une image sur la partie du support de réception supportée sur le tambour,
la coupe du support de réception pour séparer la partie du support de réception qui a reçu l'image imprimée d'une partie reliée au rouleau d'alimentation en support de réception interne, la coupe étant réalisée à un emplacement du support de réception où le support de réception est supporté sur le tambour, l'emplacement étant l'un de plusieurs emplacements prédéterminés sur le tambour et le tambour comprenant plusieurs éléments de coupe disposés à des emplacements espacés prédéterminés sur le tambour en vue de réaliser les plusieurs emplacements prédéterminés où le support de réception peut être coupé à l'une de plusieurs longueurs sélectionnées différentes, et
l'enlèvement de la partie du support de réception qui a reçu l'image imprimée du tambour.

7. Procédé d'impression selon la revendication 6 et dans lequel les éléments de coupe sont des encoches qui sont chacune dirigées dans une direction parallèle à l'axe central du tambour et conformément à une longueur sélectionnée prédéterminée, une encoche respective coopère avec une lame de coupe externe au tambour pour couper le support de réception à la longueur sélectionnée.

8. Procédé d'impression selon la revendication 6 ou 7 et dans lequel l'enlèvement du support de réception qui a reçu l'image imprimée est réalisé en enlevant tout d'abord du tambour une extrémité du support de réception qui a été coupée en dernier.

9. Procédé d'impression selon l'une quelconque des revendications 6 à 8 et dans lequel lors de l'impression de chacune de plusieurs images qui sont coupées à des tailles différentes, la quantité du support de réception qui est supportée sur la surface extérieure du tambour rotatif avant l'impression de chacun des plusieurs images est la même.

10. Procédé d'impression selon l'une quelconque des revendications 6 à 9 et dans lequel une image est imprimée sur la partie du support de réception supportée sur le tambour en utilisant une imprimante à jet d'encre qui dépose de l'encre sur la partie.
